# EUROPÄISCHE PATENTANMELDUNG

(11) **EP 0 741 002 A2**
(43) Veröffentlichungstag der Anmeldung: **06.11.1996**
(21) Anmeldenummer: 96106082.9
(22) Anmeldetag: 18.04.1996
(51) Int. Cl.: B32B 5/18, B32B 5/30

(54) **Verbundmaterial für Fahrzeuge und Polstermöbel**

(30) Priorität: 04.05.1995 DE 19516393
(71) Anmelder: Paul Hartmann Aktiengesellschaft, D-89522 Heidenheim (DE)
(72) Erfinder: Hartwig, Peter, Dr., 77876 Kappelrodeck (DE); Dietrich, Bernd, 77855 Achern (DE)
(74) Vertreter: Becker, Maria, Dipl.-Phys.

(57) **Zusammenfassung**

Die Erfindung betrifft ein Verbundmaterial, insbesondere für Fahrzeuge und Polstermöbel, mit einer Schaumstofflage, auf deren Vorderseite wenigstens eine Oberlage vorgesehen ist. Um ein verbessertes Verbundmaterial bereitzustellen, das insbesondere gute Gleiteigenschaften aufweist und einfach zu verarbeiten ist, ist vorgesehen, daß die Rückseite der Schaumstofflage mit einem Pulvermaterial beschichtet ist.

## Beschreibung

Die Erfindung betrifft ein Verbundmaterial für Fahrzeuge und Polstermöbel, wie es im Oberbegriff des Anspruches 1 angegeben ist.

Aus der DE 22 44 209 C3 ist es bereits bekannt, bei der Herstellung von Polsterkörpern, die aus einem mit einer Oberlage aus Kunstleder überzogenen Schaumstoff bestehen, das luftdurchlässige Kunstleder vor dem Verformen und Ausschäumen mit einem luftundurchlässigen, wasserlöslichen Film zu überziehen, der nach der Fertigstellung des Polsterkörpers abgespült wird.

Aus der EP 0 095 527 B1 ist ein Sitzpolster für ein Kraftfahrzeug bekannt, bei dem die Oberseite eines Schaumstoffkörpers mit einer 5 bis 20 mm dicken Faserschicht verbunden ist, auf deren Oberseite ein mit einem Bindemittel verfestigtes Faservlies angeordnet ist. Der so vorbereitete Polsterkörper wird dann mit einem Bezugsstoff überzogen.

Verbundmaterialien, wie sie im Oberbegriff das Anspruchs 1 angegeben sind, bestehen demgegenüber im wesentlichen aus einer Schaumstofflage, einer voluminösen oder mechanisch verfestigten Vliesstofflage, die auf die Schaumstofflage aufgebracht ist, und einer auf dem Vliesstoff befindlichen dichten textilen Oberlage.

Da derartige Verbundmaterialien nach ihrer Herstellung für eine weitere Verarbeitung im Fahrzeuginnenbereich oder in der Polstermöbelindustrie konfektioniert werden, ist auf der Rückseite der Schaumstofflage, also auf ihrer von der Oberlage abgewandten Seite außerdem eine textile Rückseitenbeschichtung vorgesehen, die nur wegen ihrer guten Gleiteigenschaften beim Konfektionieren benötigt wird, da das Verbundmaterial sonst wegen der schlechten Gleiteigenschaften der Schaumstofflage nicht auf einem Nähmaschinentisch gleitet und sich dann nicht vernähen läßt.

Wird ein derartiges Verbundmaterial im Möbelbereich eingesetzt, so muß die textile Rückseitenbeschichtung vor der Verpolsterung entfernt werden, da sonst ein unerwünschter Trommelfelleffekt auftritt, der infolge der Spannung des verarbeiteten Verbundmaterials zu Geräuschen bei der Benutzung eines daraus bestehenden Polsters führt. Hierdurch wird die weitere Verarbeitung relativ umständlich und es entsteht unerwünschter Abfall.

Davon ausgehend liegt der Erfindung die Aufgabe zugrunde, ein verbessertes Verbundmaterial der eingangs genannten Art bereitzustellen, das insbesondere gute Gleiteigenschaften aufweist und einfach zu verarbeiten ist.

Diese Aufgabe wird erfindungsgemäß durch ein Verbundmaterial nach Anspruch 1 gelöst.

Erfindungsgemäß wird also auf die Rückseite der Schaumstofflage des Verbundmaterials eine Beschichtung aus Pulvermaterial aufgebracht, wobei das Pulvermaterial vorzugsweise durch eine thermische Behandlung mit der Rückseite der Schaumstofflage verbunden wird.

Die erfindungsgemäß erzeugte Rückseite des Verbundmaterials weist sehr gute Gleiteigenschaften auf, so daß es sich auf einfache Weise beim Konfektionieren verarbeiten läßt. Die Beschichtung mit Pulvermaterial hat dabei den Vorteil, daß sie vor der Verpolsterung insbesondere im Polstermöbelbereich nicht entfernt zu werden braucht, da eine Trommelfellwirkung nicht auftritt. Somit werden Abfall und Arbeitszeit eingespart.

Besonders vorteilhaft ist es, wenn als Pulvermaterial für die Beschichtung der Rückseite der Schaumstofflage ein Klebemedium verwendet wird, das bei der Weiterverarbeitung zum Verkleben des Verbundmaterials mit einer zu polsternden Oberfläche eingesetzt werden kann.

Vorteilhafterweise werden als Pulvermaterial für die Beschichtung der Schaumstofflagenrückseite Pulver aus Polypropylen, Polyethylen, Polyamid, Polyester oder anderen geeigneten thermoplastischen Kunststoffen verwendet.

Insbesondere für den Einsatz im Fahrzeugbereich ist es zweckmäßig, wenn ein als Klebemedium geeignetes co-Polyamid mit geringer Foggingneigung eingesetzt wird, also ein Material mit einem geringen Anteil von leicht flüchtigen, bei Wärmeeinwirkung z. B. infolge von Sonneneinstrahlung aus dem Material ausgasenden Bestandteilen, die sich dann als nebelartiger Belag niederschlagen.

Besonders gute Gleiteigenschaften der mit Pulvermaterial beschichteten Rückseite der Schaumstofflage werden erreicht, wenn bei der thermischen Behandlung zur Verbindung des Pulvermaterials mit dem Schaumstoff die Temperatur und die Einwirkzeit auf die Viskosität und den Schmelzbereich des für die Beschichtung eingesetzten Pulvermaterials abgestimmt werden, so daß das Pulvermaterial auf der Schaumstofflage aufschmilzt. Durch einen Glättvorgang der noch plastischen Masse läßt sich die rückseitige Oberfläche der Schaumstofflage weiter verbessern.

Um eine geschlossene rückseitige Oberfläche der Schaumstofflage zu verhindern, ist es zweckmäßig, wenn ein Pulvermaterial mit Korngrößen im Bereich von 50 µm bis 1000 µm, insbesondere von 200 µm bis 500 µm, mit einer Auftragsmenge zwischen 100 g/m² und 120 g/m², insbesondere zwischen 15 g/m² und 60 g/m², verwendet wird.

Vorteilhafterweise ist auf die Schaumstofflage ein voluminöser Vliesstoff aufgebracht. Dem Vliesstoff sind zur Verbesserung der Polstereigenschaften silikonisierte Fasern beigemischt. Zur inneren Verfestigung enthält der Vliesstoff Kern-Mantel-Bikomponentenfasern.

Besonders zweckmässig ist es, wenn die von der Schaumstoffauflage abgewandte Oberseite des Vlieses mit einem einen Faserdurchstich verhindernden textilen Material kaschiert ist.

Weitere vorteilhafte Ausgestaltungen und Verbesserungen der Erfindung sind in den Unteransprüchen beschrieben.

Ein erstes Ausführungsbeispiel eines erfindungsgemäßen Verbundmaterials umfaßt eine Schaumstofflage aus Polyurethan mit
einem Raumgewicht zwischen 15 kg/m³ und 100 kg/m³, vorzugsweise zwischen 23 kg/m³ und 60 kg/m³. Die Schaumstofflage kann dabei alle herstellbaren Stauchhärten aufweisen. Die Dicke der Schaumstofflage liegt vorzugsweise im Bereich zwischen 4 mm und 50 mm, insbesondere jedoch zwischen 10 mm und 30 mm.

Auf die Schaumstofflage ist mit einem Klebemedium ein voluminöser PES-(Polyester)-Vliesstoff kaschiert, dessen Flächengewicht zwischen 20 g/m² und 800 g/m², insbesondere jedoch zwischen 50 g/m² bis 400 g/m² liegt. Der Vliesstoff besteht dabei aus Fasern, deren Fasertiter zwischen 2,0 dtex und 30 dtex, vorzugsweise zwischen 3,0 dtex und 17 dtex liegt. Um einen weichen, leicht seifigen Vliesstoff zu erhalten, wird dem Fasermaterial ein Anteil von silikonisierten, also mit einem Silikonmaterial behandelten, insbesondere überzogenen PES-Fasern beigemischt, wobei der Anteil der silikonisierten PES-Fasern bei 10% bis 80%, vorzugsweise bei 20% bis 60% liegt.

Zur Verfestigung des Vliesstoffes wird ein Anteil von Bindefasern in Kern-Mantel-Ausführung auf PES/co-PES-Basis verwendet. Der Anteil der Bindefasern beträgt dabei zwischen 10% und 60%, vorzugsweise jedoch 15% bis 30%.

Auf die Vliesstoffoberseite wird ein textiles Material kaschiert, das einen Faserdurchstich verhindert und die Abriebfestigkeit der vorderen Oberseite des Verbundmaterials verbessert. Dabei wird als textile Oberlage oder als Dekormaterial Polyamid- oder Polyester-Charmeuse oder hinreichend dichte Spinnvliesstoffe eingesetzt.

Für das Kaschieren des textilen Materials auf die Vliesstoffoberseite wird ein flächiges thermoplastisches Material verwendet.

Für die Beschichtung der Rückseite der Schaumstofflage aus Polyurethan wird ein Polyethylenpulver mit Korngrößen zwischen 50 µm und 1000 µm, vorzugsweise zwischen 200 µm und 500 µm, verwendet und in einer Menge von 10 g/m² bis 120 g/m², vorzugsweise jedoch mit einer Menge zwischen 15 g/m² und 60 g/m², aufgebracht.

Bei einem anderen Ausführungsbeispiel wird eine Schaumstofflage, deren Dicke zwischen 2 mm und 20 mm, vorzugsweise jedoch zwischen 4 mm und 10 mm, liegt, verwendet. Die Rückseite der Schaumstofflage wird mit einem als Klebemedium geeigneten Pulvermaterial aus co-Polyamid mit geringer Foggingneigung beschichtet. Die Auftragsmenge und Korngröße des Pulvers liegen dabei in den beim ersten Ausführungsbeispiel angegebenen Bereichen. Als auf der Vorderseite der Schaumstofflage vorgesehene Oberlage wird ein Dekorstoff aus PES aufgebracht, der zweckmäßigerweise durch eine Flammkaschierung mit dem Polyurethanschaum der Schaumstofflage verbunden wird.

Ein derartiges Verbundmaterial läßt sich insbesondere im Fahrzeuginnenbereich zum Beispiel als Türseitenverkleidung einsetzen. Aus dem Verbundmaterial nach dem zweiten Ausführungsbeispiel hergestellte Teile lassen sich bei der weiteren Verarbeitung mittels Druck- und Wärmeeinwirkung mit einem entsprechenden Teil einer Türseitenverkleidung für ein Fahrzeug verbinden. Dabei wirkt das auf der Rückseite der Schaumstofflage aufgebrachte Pulvermaterial aus co-Polyamid als Klebemedium, das das Verbundmaterial mit dem Türseitenteil verklebt, so daß ein haltbarer Verbund entsteht.

## Patentansprüche

1. Verbundmaterial, insbesondere für Fahrzeuge und Polstermöbel, mit einer Schaumstofflage, auf deren Vorderseite wenigstens eine Oberlage vorgesehen ist,
**dadurch gekennzeichnet**,
daß die Rückseite der Schaumstofflage mit einem Pulvermaterial beschichtet ist.

2. Verbundmaterial nach Anspruch 1,
dadurch gekennzeichnet, daß das Pulvermaterial mittels einer thermischen Behandlung mit der Schaumstofflage verbunden ist.

3. Verbundmaterial nach Anspruch 1 oder 2,
dadurch gekennzeichnet, daß das Pulvermaterial aus Polyethylen, Polypropylen, Polyamid, Polyester oder einem anderen thermoplastischen Material besteht.

4. Verbundmaterial nach Anspruch 1 oder 2,
dadurch gekennzeichnet, daß das Pulvermaterial aus co-Polyamid mit geringer Foggingneigung besteht.

5. Verbundmaterial nach einem der vorhergehenden Ansprüche, dadurch gekennzeichnet, daß das Pulvermaterial aus einem Klebemittel besteht.

6. Verbundmateriai nach einem der vorhergehenden Ansprüche, dadurch gekennzeichnet, daß die Korngröße des Pulvermaterials 50 µm bis 1000 µm, insbesondere 200 µm bis 500 µm beträgt.

7. Verbundmaterial nach einem der vorhergehenden Ansprüche, dadurch gekennzeichnet, daß das Pulvermaterial mit einer Auftragsmenge zwischen 10 g/m² und 120 g/m², insbesondere zwischen 15 g/m² und 60 g/m² aufgetragen ist.

8. Verbundmaterial nach einem der vorhergehenden Ansprüche, dadurch gekennzeichnet, daß die Schaumstofflage aus einem Polyurethanschaum mit einem Raumgewicht von 15 kg/m³ bis 100 kg/m³, vorzugsweise von 23 kg/m³ bis 60 kg/m³ und einer Schaumdicke zwischen 2 mm und 55 mm, vorzugsweise zwischen 4 mm und 30 mm gebildet ist.

9. Verbundmaterial nach einem der vorhergehenden Ansprüche, dadurch gekennzeichnet, daß auf die Schaumstofflage ein Vliesstoff mit einem Flächengewicht von 20 g/m² bis 800 g/m² und Fasertitern zwischen 2,0 dtex und 30 dtex, vorzugsweise zwischen 3,0 dtex und 17 dtex aufgebracht ist.

10. Verbundmaterial nach Anspruch 9, dadurch gekennzeichnet, daß dem Vliesstoff 10% bis 80%, vorzugsweise 20% bis 60% silikonisierte Fasern beigemischt sind.

11. Verbundmaterial nach Anspruch 9 oder 10,
dadurch gekennzeichnet, daß dem Vliesstoff 10% bis 60%, vorzugsweise 15% bis 30% Kern-Mantel-Bikomponentenfasern beigefügt sind.

12. Verbundmaterial nach Anspruch 9, 10 oder 11,
dadurch gekennzeichnet, daß die von der Schaumstoffauflage abgewandte Oberseite des Vlieses mit einem einen Faserdurchstich verhindernden textilen Material kaschiert ist.
